## Europäisches Patentamt

## European Patent Office

## Office européen des brevets

(19)

(11) Veröffentlichungsnummer: **0 038 452**
**B1**

(12) **EUROPÄISCHE PATENTSCHRIFT**

(45) Veröffentlichungstag der Patentschrift:
24.07.85

(51) Int. Cl.⁴: **A 61 C 1/00**

(21) Anmeldenummer: 81102506.3

(22) Anmeldetag: 02.04.81

(54) Steuereinrichtung für ein zahnärztliches Gerät.

(30) Priorität: 17.04.80 DE 3014893

(43) Veröffentlichungstag der Anmeldung:
28.10.81 Patentblatt 81/43

(45) Bekanntmachung des Hinweises auf die Patenterteilung:
24.07.85 Patentblatt 85/30

(84) Benannte Vertragsstaaten:
FR GB IT SE

(56) Entgegenhaltungen:
EP - A - 0 005 791
DE - A - 1 541 197
DE - A - 2 434 094
DE - A - 2 615 827
DE - A - 2 733 916
DE - B - 2 037 181
DE - B - 2 621 760
US - A - 4 106 198
US - A - 4 114 273

(73) Patentinhaber: Siemens Aktiengesellschaft, Berlin und München Wittelsbacherplatz 2, D-8000 München 2 (DE)

(72) Erfinder: Kissel, Heinz, Kiesstrasse 11,
D-6084 Gernsheim (DE)
Erfinder: Pabst, Josef, Tannenstrasse 26,
D-6805 Heddesheim (DE)
Erfinder: Schuss, Werner, In der Lahrbach 18,
D-6148 Heppenheim (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine Steuereinrichtung für ein zahnärztliches Gerät, welches wenigstens ein Handinstrument mit einer Versorgungsleitung enthält, die aus einem Gehäuse heraus aus einer Ausgangsstellung in mehrere Betriebsstellungen bringbar, mittels einer Halte- und Rückholvorrichtung in diesen Stellungen feststellbar und wieder in die Ausgangsstellung rückstellbar ist, und welches Schaltmittel für elektrisch betätigbare Stell- oder Antriebsglieder enthält, mit denen bestimmte Gerätefunktionen, beispielsweise das Rückführen der Versorgungsleitung, Vorbereiten und Ein- und Ausschalten von Antrieben und Medienflüssen, angesteuert oder direkt geschaltet werden können, wobei die Steuersignale zur Ansteuerung der Stellglieder durch unmittelbar benachbart der Versorgungsleitung angeordnete Befehlsmelder erhalten werden, die zumindest dann, wenn die Versorgungsleitung aus der Ausgangsstellung gebracht und in diese wieder zurückgeführt ist, ansprechen und Steuerimpulse an eine elektronische Steuerschaltung zur Ansteuerung der Stellglieder geben.

Eine derartige Steuereinrichtung ist beispielsweise aus US-A-4 106 198 und US-A-4 114 273 bekannt. Die mit diversen Handinstrumenten verbundenen Versorgungsleitungen sind dort in einem tischartigen Gehäuse untergebracht und über Umlenkrollen geführt, die wiederum in im Gehäuse angeordneten Längsführungen verschiebbar gehaltert sind. An jeder Umlenkrolle ist ein Zugseil befestigt, welches bei eingezogener Versorgungsleitung auf einer im Gehäuse ortsfest gehalterten, mit einer Rückstellfeder versehenen Trommel aufgewickelt ist. Die Trommel enthält ein Sperrad, welches mit einem durch einen Elektromagneten betätigbaren Sperrklinkenhebel zusammenwirkt. Der Elektromagnet ist Teil einer Steuerschaltung, die optoelektronische Schaltmittel enthält, welche in einem Ausführungsbeispiel durch eine Lichtschranke mit einem LED und einem korrespondierend angeordneten Fototransistor gebildet wird, die im rückwärtigen Teil des Gehäuses in unmittelbarer Nähe des Gesperres angeordnet ist. Bei eingezogener Versorgungsleitung unterbricht ein mit der Umlenkrolle verbundenes Abdeckteil den Lichtstrom der Lichtschranke. Die Steuerschaltung ist so ausgelegt, dass der Elektromagnet bei eingezogener Versorgungsleitung aktiviert ist, wodurch das Gesperre entriegelt und die Trommel mit dem Sperrad frei drehbar ist. Wird das betreffende Handinstrument aus seiner Ablage entnommen und damit die Versorgungsleitung aus dem Gehäuse herausgezogen, wird die Umlenkrolle in ihrer Führung im Gehäuse nach vorne bewegt, wodurch die Lichtschranke aktiviert und der Schaltkreis des Elektromagneten abgeschaltet wird. Die Wickeltrommel für das Zugseil ist nun in der einen Richtung, die dem Ausziehen der Versorgungsleitung aus dem Gehäuse entspricht, frei drehbar, wodurch die Versorgungsleitung in Ausziehrichtung in jeder beliebigen Position durch Einrasten des Sperrklinkenhebels in einen der Rastzähne des Sperrades feststellbar ist. Ein Zeitschaltglied sorgt dafür, dass der Elektromagnet nach kurzer Zeit wieder aktiviert wird. Infolge des Reibschlusses zwischen Sperrklinkenhebel und Sperrad kann jedoch der Magnet den Sperrklinkenhebel erst dann aus der Raststellung abheben, wenn der Reibschluss aufgehoben ist, was durch kurzes Ziehen an der Versorgungsleitung erreicht werden kann. Die Wickeltrommel ist sodann wieder in beiden Richtungen frei drehbar, d.h. die Versorgungsleitung kann nun entweder eingezogen oder weiter ausgezogen werden.

Das mit der Umlenkrolle der Versorgungsleitung verbundene Zugseil, die Sperrklinkenanordnung mit der Wickeltrommel und das Zeitglied sind überwiegend mechanische Teile, die die Montage und Justierung der Vorrichtung erschweren und die einem erhöhten Verschleiss unterworfen sind. Das mit Rückstellkraft belastete Zugseil erfordert ausserdem bei Entnahme der Versorgungsleitung eine zusätzliche Kraft (Rückstellkraft der Wickeltrommel) zu überwinden, die mit zunehmender Ausziehlänge der Versorgungsleitung grösser wird.

Ausser der Rückstellvorrichtung enthält die bekannte Steuereinrichtung noch einen Verriegelungsschaltkreis, der dafür sorgt, dass bei einem entnommenen Handinstrument alle weiteren, in Ausgangsstellung befindlichen Instrumente so lange inaktiviert bleiben, bis das entnommene Instrument in die Ausgangsposition zurückgeführt wird.

Eine derartige Verriegelungsschaltung ist auch aus der DE-B-2 434 094 bekannt. In dieser Druckschrift ist eine Sicherheitsschaltung mit Speicherwirkung beschrieben, die verhindern soll, dass, wenn der Arzt sein Arbeitshandinstrument in die Ablage zurückführt, die Helferin vorher, beispielsweise zum Zwecke eines Werkzeugaustausches, ein Ruhehandinstrument entnommen hat, dieses Ruhehandinstrument aktiviert wird. Die Sicherheitsschaltung wird bei Herausnahme von einem oder mehreren Ruhehandinstrumenten wirksam und ist so geschaltet, dass die herausgenommenen Ruhehandinstrumente nach Rückführung des ersten Arbeitshandinstruments und bzw. oder anschliessender Herausnahme eines anderen Arbeitshandinstrumentes stillstehen. Nach Herausnahme eines Arbeitshandinstrumentes bleiben die verbleibenden oder in der weiteren Folge noch entnommenen Ruhehandinstrumente weiter stillgesetzt. Die Speicherfunktion der Sicherheitsschaltung kann durch einen manuell zu betätigenden Schalter ausgeschaltet werden. Die Köcherschalter, also die Schalter an der Ablage der Instrumente, können in einem Ausführungsbeispiel auch durch elektronische Sensorschalter gebildet sein; diese befinden sich dann an den Ablagehalterungen. Eine Aktivierung erfolgt durch Berührung bei Entnahme eines Instrumentes aus der Halterung.

Eine ähnliche, jedoch berührungslos arbeitende Schalteinrichtung ist aus der EP-A1-0 005 791 bekannt. Dort sind in den hülsen- oder ringförmig gestalteten Halterungsteilen für die Instrumente Schalteinrichtungen in Form von Lichtschranken oder Näherungsschaltern vorgesehen. Die mit den Schalteinrichtungen auszulösenden Schaltfunktionen können entweder das Einschalten oder Vorwählen der elektrischen Versorgung für die Antriebe der Handstücke bewirken. Ein Steuersignal kann hier nur bei Positionswechsel, d.h. im Moment der Entnahme des Handinstruments aus der Halterung, sowie bei Ablage des Instruments in die Halterung gewonnen werden.

Das gleiche gilt für die eingangs erläuterten, von der Mechanik her relativ aufwendigen und damit auch störanfälligen Einrichtungen mit elektromagnetisch entriegelbaren Gesperren.

Der im Anspruch 1 angegebenen Erfindung liegt die Aufgabe zugrunde, eine Steuereinrichtung der eingangs genannten Gattung dahingehend zu verbessern, dass sich – unter Vermeidung einer aufwendigen Mechanik – aus dem Entnahme- und Ablagevorgang eines Handinstruments eine Vielfalt von Steuer- und Verriegelungsfunktionen gewinnen lässt, die ein von der Anwendung einfaches und betriebssicheres Ansteuern der Antriebe bzw. deren elektrische Versorgung gewährleisten.

Dadurch, dass die benötigten Steuersignale direkt aus dem Weg der der Versorgungsleitung aufgezwungenen Bewegung abgeleitet werden, brauchen hierzu keine zusätzlichen mechanischen Teile und auch kein Zeitschalter vorgesehen zu werden. Bei Verwendung eines motorischen, mittels Reibrad od. dgl. auf die Versorgungsleitung wirkenden Antriebes kann die Rückzugskraft und damit auch die Rückzugsgeschwindigkeit praktisch konstant gehalten werden. Nach der erfindungsgemässen Steuereinrichtung lassen sich beispielsweise folgende Steuerfunktionen relativ einfach, dennoch aber betriebssicher durchführen:

1. Durch Aufnehmen und Herausziehen eines Handstückes aus dem Gerät kann über die entstehende Vorwärtsbewegung der Versorgungsleitung die dem entnommenen Handstück zugehörige Gerätefunktion vorbereitet und ein Fussschaltersignal, welches den Antrieb einschalten würde, verriegelt werden. Für eine zusätzliche Betriebssicherheit kann in vorteilhafter Weise die Auslösung einer Fördereinrichtung für eine Rückführung der Versorgungsleitung bei einer Vorwärtsbewegung der Versorgungsleitung verriegelt sein.

2. Bei einem erstmaligen Stillstand der Versorgungsleitung nach einer Entnahme des Handstückes können die vorbereiteten Gerätefunktionen dann aktiviert und in Verbindung mit dem Fussschalter eingeschaltet werden.

3. Bei einem Weiterziehen der Versorgungsleitung nach dem erstmaligen Stillstand können die aktivierten Gerätefunktionen aktiv, die Verriegelung des Fussschalters jedoch ausser Funktion bleiben. Dadurch ist ein Einschalten des Handinstruments über den Fussschalter möglich.

4. Durch Aufprägen einer Wellenbewegung auf die Versorgungsleitung, die dadurch entsteht, dass bei einer peitschenartigen Bewegung des Handstückes die Versorgungsleitung quer zu ihrer Längsausdehnung verlaufende Bewegungen ausführt, kann über Beschleunigungsaufnehmer eine Transport- oder Rückstelleinrichtung für die Versorgungsleitung aktiviert werden. Die vorbereiteten oder aktivierten Gerätefunktionen können durch den Beschleunigungsimpuls über elektronische Verknüpfungsglieder abgeschaltet werden.

5. Während einer Rückförderbewegung der Versorgungsleitung und nach Stillstand der Transport- oder Rückstelleinrichtung sind die aktivierten oder vorbereiteten Gerätefunktionen abgeschaltet.

6. Eine Unterbrechung der Rückförderbewegung kann schliesslich zu einer Abschaltung der Transport- oder Rückstelleinrichtung führen.

Ein Ausführungsbeispiel der Erfindung wird nachfolgend anhand der Zeichnung näher erläutert. Es zeigen:

Fig. 1 ein zahnärztliches Gerät mit den zugehörigen Versorgungseinrichtungen in vereinfachter und schematischer Darstellung,

Fig. 2 die Transporteinrichtung für die Versorgungsleitung eines Handstückes in einer Prinzipdarstellung und

Fig. 3 ein Blockschaltbild der Steuereinrichtung nach der Erfindung.

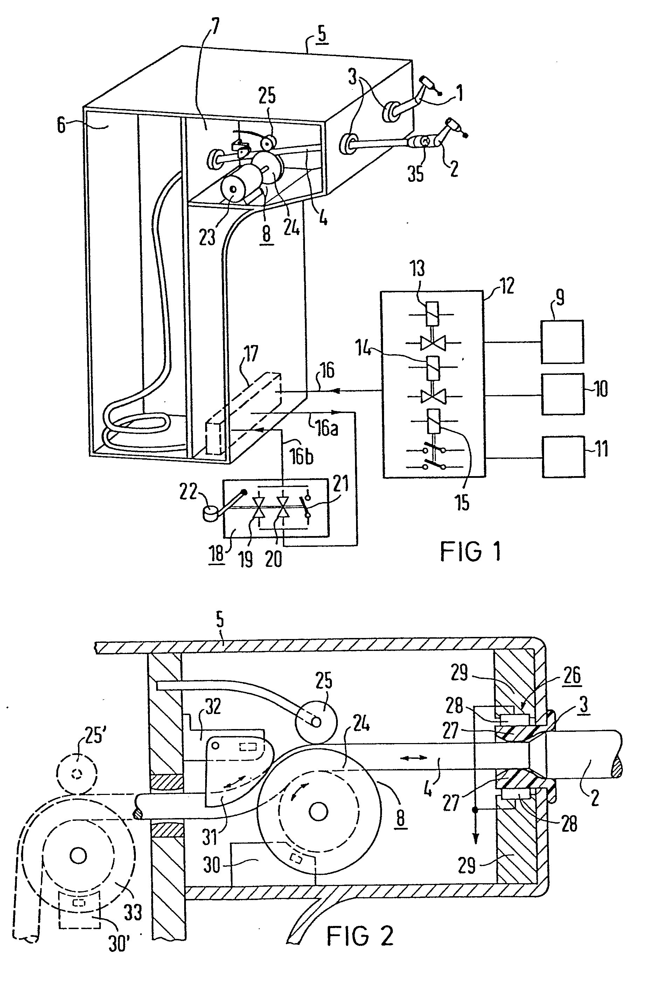

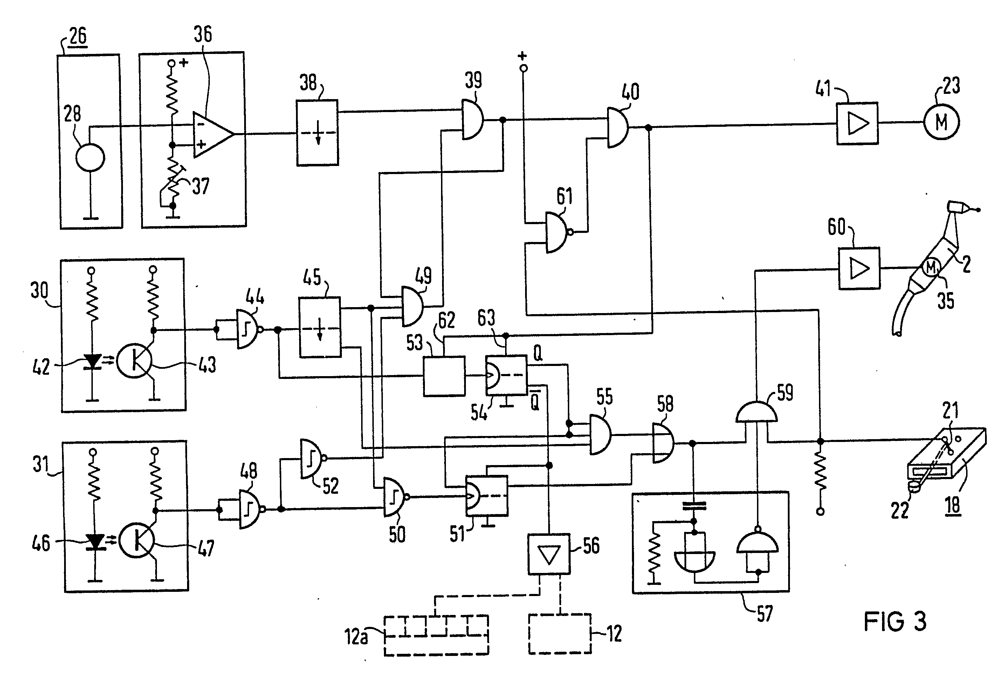

Die Fig. 1 zeigt in einer stark vereinfachten Darstellung ein zahnärztliches Gerät mit einem Turbinenhandstück 1 und einem Elektromotorhandstück 2. Bei Nichtgebrauch sind die Handstücke 1, 2 in Ablagehülsen 3 gehalten. Die zum Betrieb der beiden Handstücke 1 und 2 erforderlichen Medien (Luft und Wasser bei dem Turbinenhandstück und elektrischer Strom sowie gegebenenfalls Luft und Wasser bei dem Elektromotorhandstück) werden über Versorgungsleitungen zugeführt, von denen diejenige für das Handstück 2 mit der Position 4 bezeichnet ist. Ein Grossteil der Versorgungsleitung 4 wird bei im Gerät abgelegtem Handstück von einem im hinteren Teil des Gerätegehäuses 5 gelegenen Aufnahmeschacht 6 aufgenommen. In einem vorderen Gehäuseabschnitt 7 ist eine mit 8 bezeichnete Halte- und Rückholeinrichtung angeordnet, die in Fig. 2 zusammen mit der Schlauchführung im Prinzip noch näher dargestellt ist.

Die Medien Luft, Wasser und elektrischer Strom werden von Versorgungsquellen 9, 10 und 11 einem Versorgungsbaustein 12 (Anschlusskasten) zugeführt, der für die Medien Luft und Wasser Elektromagnetventile 13, 14 und für die Zuschaltung von elektrischem Strom ein Relais 15 enthält. Die Medien werden – selbstverständlich getrennt – über einen Leitungsabschnitt 16 einem im Gerätegehäuse 5 angeordneten Verteilerkasten 17 zugeführt und von dort aus über einen Leitungsabschnitt 16a einem Fussschalter 18 zugeleitet, der wiederum zwei Freigabeventile 19, 20 und ein oder mehrere elektrische Schalter 21 enthält. Der Fussschalter 18 ist in bekannter Weise so ausgebildet, dass durch einen als Schwenk- oder Niedertrethebel ausgebildeten Betätigungshebel 22 die elektrischen Schaltmittel 21 und/oder die Freigabeventile 19, 20 für die Zufuhr der Medien zu den Handstücken 1 oder 2 geschaltet werden. Die Medien werden sodann über einen Leitungsabschnitt 16b in die entsprechende Versorgungsleitung 4 für das Handstück 2 (bzw. über die nicht dargestellte Versorgungsleitung für das Handstück 1) eingespeist.

Die Halte- und Rückzugsvorrichtung 8 für die Versorgungsleitung 4 enthält einen Elektromotor 23, auf dessen Antriebsachse eine Transportrolle 24 aufgesetzt ist. Mit 25 ist eine federbelastete Andrückrolle bezeichnet, die die Versorgungsleitung 4 für einen gleichmässigen Transport mit einer ausreichenden Anpresskraft auf die Transportrolle 24 drückt.

Die Fig. 2 zeigt die Anordnung der Halte- und Rückholvorrichtung sowie die Schlauchdurchführung im Prinzip anhand einer Schnittdarstellung vergrössert dargestellt. Unmittelbar angrenzend an die Handstückhalterungshülse 3 bzw. mit dieser direkt gekoppelt ist ein Kraft- bzw. Beschleunigungsaufnehmer 26, bestehend aus einem Schlauchdurchführungsteil 27, zwei daran befestigten Piezo-Plättchen 28 und zwei Gegenlagern 29. Die Piezo-Plättchen 28 sind einerseits zwischen dem Schlauchdurchführungsteil 27 und anderseits zwischen den am Gehäuse 5 befestigten Gegenlagern 29 so eingespannt, dass Druck- oder Zugbelastungen, die auf das Schlauchführungsteil 27 wirken, auf die Piezo-Plättchen übertragen werden. Für eine verstärkte Übertragung der Zug- oder Druckbelastung bei einer Schlauchbewegung können die Piezo-Plättchen auch an anderer geeigneter Stelle im Gehäuse befestigt sein, z.B. unterhalb der Deckseite des Gehäuseteils 5.

Der vom Motor 23 angetriebenen Transportrolle 24 ist eine Lichtschranke 30 (Gabel- oder Reflexionslichtschranke) zugeordnet, welche die Bewegung der Rolle 24 in der einen oder anderen Richtung erfasst. Mit 31 ist eine weitere Lichtschranke (ebenfalls Gabel- oder Reflexionslichtschranke) bezeichnet, die an einem am Gehäuse 5 befestigten Halteteil 32 schwenkbar gelagert ist. Diese Lichtschranke dient dazu, die Bewegungsrichtung der Versorgungsleitung 4 zu erfassen, d.h. zu melden, ob der Schlauch aus- oder eingefahren wird.

Um einen eventuellen möglichen Schlupf zwischen Schlauch und motorisch angetriebener Transportrolle 24 zu vermeiden, ist es denkbar, die Lichtschranke 30 mit einer Steuerscheibe 33 an einer von der Transportrolle 24 getrennten Stelle (siehe gestrichelte Einzeichnung) zusammenwirken zu lassen. Selbstverständlich ist dann auch eine gegen den Schlauch 4 anliegende Andrückrolle 25′ vorzusehen.

Bei einer peitschenartigen Bewegung der Versorgungsleitung, also quer zur Ausziehrichtung, werden durch die dabei entstehenden Wellen über die Teile 27 auf die Piezo-Plättchen 28 Druck- oder Zugspannungen ausgeübt, die der Beschleunigung verhältnisgleich sind. Die erzeugten Spannungen werden in Steuersignale umgeformt, mit denen schliesslich der Antriebsmotor 23 für die Halte- und Rückzugsvorrichtung 8 angesteuert wird.

Anstelle des Piezo-Prinzip kann auch ein induktives Prinzip zur Anwendung gelangen. So kann z.B. an der Schlauchtülle oder am Schlauchführungsteil 27 ein in einer Tauchspule bewegter Dauermagnet angebracht sein. Bei einer peitschenartigen Bewegung der Versorgungsleitung wird in der Spule eine Spannung erzeugt, die wiederum der Beschleunigungsbewegung der Versorgungsleitung verhältnisgleich ist. Die Anordnung lässt sich auch umkehren, so dass der Dauermagnet feststeht und die Tauchspule bewegt wird.

Anstelle der aufgezeigten motorisch angetriebenen Transport- oder Fördereinrichtung für die Versorgungsleitung kann auch in konventioneller Art eine durch Gewicht den Schlauch in seine Ausgangsstellung bringbare Rückstelleinrichtung vorgesehen sein. Zur Halterung des Schlauches in einer ausgezogenen Stellung kann eine mit Klinkenrasten versehene Umlenkrolle (entsprechend der Transportrolle 24) vorgesehen sein, die mit einem elektromotorisch ausrückbaren Gesperre zusammenwirkt. Der Elektrohubmagnet zur Entriegelung des Gesperres kann, wie vorstehend erläutert, mittels der Beschleunigungsaufnehmer, die wiederum piezoelektrisch oder induktiv ausgebildet sein können, gesteuert werden.

Anhand der Fig. 3 wird das Blockschaltbild für die Steuerung einerseits des Stellmotors 23 für die Schlauchrückführung und anderseits eines im Handstück 2 befindlichen Antriebsmotors 35 sowie zum vorbereitenden Einschalten der Medien über den Versorgungsbaustein 12 erläutert. Die Piezo-Plättchen 28 des Kraft- bzw. Beschleunigungsaufnehmers 26 sind mit einem Komparator 36 verbunden, dessen Schaltschwelle mittels eines Potentiometers 37 eingestellt werden kann. Der Ausgang des Komparators 36 führt zu einer nachtriggerbaren monostabilen Kippstufe 38, an deren Ausgang Q ein ODER-Gatter 39 angeschlossen ist. Der Ausgang des ODER-Gatters 39 ist mit einer UND-Stufe 40, an deren Ausgang eine Anpassschaltung (Interface-Schaltung) 41 angeschlossen ist, die den Stellmotor 23 für die Leitungsrückführung ansteuert, verbunden.

Der Befehlsmelder 30, welcher die Bewegung der Versorgungsleitung 4 erfasst, enthält einen von einer Fotodiode 42 beaufschlagten Optotransistor 43. Die bei Bewegung des Schlauches entstehenden Impulse werden von einem Schmitt-Trigger-Gatter 44 aufbereitet, um die erforderliche Falnkensteilheit für die nachfolgend angeordnete nachtriggerbare monostabile Kippstufe 45 zu erhalten. Das gleiche gilt für den Transportmelder 31, der die Bewegungsrichtung der Versorgungsleitung meldet, also ob der Schlauch aus der Ablage entnommen wird oder in diese zurückgeführt wird. Auch dieser Befehlsmelder enthält einen von einer Fotodiode 46 mit Licht beaufschlagten Optotransistor, dessen Impulse von einem Schmitt-Trigger-Gatter 48 aufbereitet werden. Der Q-Ausgang der Kippstufe 45 führt einerseits zu einer UND-Stufe 49 und anderseits zu einer Invertierstufe 50, deren Ausgang mit einer D-Flip-Flop-Stufe 51 verbunden ist. Der Ausgang der Schmitt-Trigger-Stufe 48 führt einerseits zu der Invertierstufe 50 und anderseits über eine weitere Invertierstufe 52 zum UND-Gatter 49.

Vom Bewegungsmelder 30 führt eine Steuerleitung zu einem Zähler 53, dessen Ausgang mit dem Takteingang eines weiteren D-Flip-Flops 54 verbunden ist. Der Ausgang Q des D-Flip-Flops 54 führt zu einer UND-Stufe 55, hingegen der andere Ausgang einerseits mit dem D-Flip-Flop 51 und anderseits mit einer Anpassschaltung 56 verbunden ist. Über die Anpassschaltung 56 kann der in Fig. 1 mit 12 bezeichnete Versorgungsbaustein angesteuert werden, wodurch ein «Vorbereiten» des Einschaltens der Versorgungsmedien Luft, Wasser und elektrischer Strom erfolgt.

Mit 57 ist eine Verzögerungsschaltung bezeichnet, die über eine weitere ODER-Stufe 58 angesteuert wird und dazu dient, über die UND-Stufe 59 die Anpassschaltung 60 zum Einschalten des Antriebsmotors 35 des Handstückes 2 anzusteuern.

Die im Fussschalter 18 angeordneten Schaltmittel 21 sind mit einem negierten UND-Gatter 61 verbunden, wodurch, wie nachfolgend noch näher erläutert, ein Anlauf des Stellmotors 23 verhindert wird, wenn der Schwenkhebel 22 des Fussschalters 18 betätigt wird (Handstück Pos. 2 in Betrieb) und der Beschleunigungsaufnehmer 26 durch eine versehentliche Schlauchbewegung anspricht.

Die Funktionsweise des Schaltbildes wird anhand des Bewegungsablaufes der Versorgungsleitung 4 bei Entnahme des Handstückes 2 erläutert. Bei Entnahme des Handstückes 2 aus der Ablage 3 werden die beiden Befehlsmelder 30 und 31 aktiviert; der Transportmelder 31 stellt fest, dass das Instrument aus der Ablagehalterung entnommen wurde und der Bewegungsmelder gibt an, dass eine Bewegung des Schlauches in Ausziehrichtung stattfindet. Die Impulse vom Bewegungsmelder 30 werden dem Zähler 53 zugeführt, der nach Erreichen eines an sich beliebig festzulegenden Zählerstandes, der einer gewissen Mindestschlauchauszugslänge (sinnvoll > 20 cm) entspricht, ein D-Flip-Flop setzt. Über die Reset-Eingänge 62 und 63 vom Zähler 53 und D-Flip-Flop 54 sind diese nur bei einer Bewegungsrichtung, nämlich bei Bewegungsrichtung aus dem Gehäuse heraus, aktiviert. Dies wird über das Gatter 40 erzielt, das nur bei einer Bewegung «aus dem Gehäuse heraus» ein 'Low'-Signal führt. Die Reset-Eingänge führen dabei 'High'-Signal.

Das D-Flip-Flop 54 erfüllt folgende Funktionen:
1. Nach Erreichen des festgelegten Zählerstandes im Zähler 53 wird der Zählerstand gespeichert und gleichzeitig über die Anpassschaltung 56 die Medienzuführung vorbereitet, im vorliegenden Ausführungsbeispiel werden also die Medien Luft, Wasser und elektrischer Strom bis zum Fussschalter 18 geführt.

Anstelle der Medienvorbereitung können auch noch andere Funktionen vorbereitet werden, so z.B. die Drehrichtung des Antriebsmotors 35 für das Handstück 2, die Wahl, ob das Handstück mit oder ohne Spray betrieben werden soll, die Höhe der Intensität usw. Eine besonders vorteilhafte Ausführungsform der Steuereinrichtung sieht vor, mittels der Interfaceschaltung 56 anstelle des Versorgungsbausteins 12 einen elektronischen Speicher 12a (in Fig. 3 gestrichelt eingezeichnet), der z.B. die Betriebswerte der Instrumente enthält, auszulesen. Bei dieser Ausführungsform werden nach einer gewissen Zeitverzögerung, bedingt durch die Zeitverzögerungsschaltung 57, und nach Betätigung des Fussschalters 18 die aus dem Speicher 12a ausgelesenen Betriebswerte über die Interfaceschaltung 60 an das gezogene Handstück 2 bzw. dessen Antrieb gegeben.

2. Nach einem erstmaligen Stillstand der Versorgungsleitung wird die vorher vorbereitete Versorgungseinheit 12 über die dargestellte Gatterlogik aktiviert. Ein versehentliches Einschalten der Antriebe über den Fussschalter 18 wird durch die nachtriggerbare monostabile Kippstufe 45 in Verbindung mit der dargestellten Gatterlogikverknüpfung beim Ziehen der Versorgungsleitung bis zum erstmaligen Stillstand verhindert.

Die Kippstufe erfüllt folgende Funktionen:
1. Überbrücken des Impulsabstandes der Lichtschranke 30.
2. Setzen eines D-Flip-Flops «Speichern, Bewegungsrichtung aus der Ablage heraus».
3. Verhindern des Einschaltens der Versorgungseinheit über Fussschalter 18 in Verbindung mit der Gatterverknüpfung beim Ziehen der Versorgungsleitung bis zum erstmaligen Stillstand.

Um ein Ausschalten der Versorgungseinheit beim Weiterziehen des Schlauches zu vermeiden, ist die Bewegungsrichtung in dem D-Flip-Flop 51 gespeichert und über das ODER-Gatter 58 logisch verknüpft.

Zum Rückfördern der Versorgungsleitung in das Gerät ist eine leichte «peitschenartige» Bewegung, d.h. quer zur Längsrichtung des Schlauches, erforderlich. Der Fussschalter 18 wird dabei nicht betätigt. Die von dem Piezo-Plättchen 28 abgegebene Spannung wird mittels des Komparators 36 auf den erforderlichen Spannungspegel gebracht. Die Schaltschwelle, d.h. die Empfindlichkeit des Piezo-Plättchens 28 kann über das Potentiometer 37 eingestellt werden. Der Spannungsimpuls steuert die nachtriggerbare monostabile Kippstufe 38 an, die über die Gatterlogik 39, 40 sowie die Anpassschaltung 41 den Stellmotor 23 für die Rückfördereinrichtung einschaltet.

Die Zeitkonstante der Kippstufe 38 muss so gross gewählt werden, dass Bewegungs- und Transportmelder 30 und 31 einschalten und die weitere Rückförderung übernehmen. Gleichzeitig werden Zähler 53 und D-Flip-Flop 54 über deren Reset-Eingänge 62 und 63 auf Null gesetzt. Daraus resultiert, dass die eventuell aktivierte Versorgungseinheit 12 abgeschaltet wird.

Eine Information für die Abschaltung des Stellmotors 23 wird durch die Gatterlogik erreicht. Wenn das Handstück 2 sich in der Ablage 3 befindet oder auch ausserhalb (vgl. Position des Handstückes in Fig. 1) angehalten wird, fehlen die Impulse vom Bewegungsmelder 30. Hieraus resultiert, dass die Kippstufe 45 nicht mehr aktiviert ist. Der Ausgang Q der Kippstufe 45 sperrt über die UND-/ODER-Verknüpfung 49, 39 und 40 den Stellmotor 23.

Mit der vorgestellten Schaltungsanordnung wird noch ein weiterer Vorteil erzielt; es wird nämlich auf einfache Weise eine Verriegelungsmöglichkeit für das ungewollte Anlaufen des Antriebsmotors eines zweiten Handstückes geschaffen, wenn ein erstes Handstück bereits in Betrieb ist. Dieser Fall tritt insbesondere dann ein, wenn während einer Präparation beispielsweise die Helferin ein zweites Handstück aus der Ablage entnimmt und das Handstück mit einem Bohrer versehen oder einen Bohrerwechsel durchführen will. Bisher war hierzu ein zusätzlicher Schalter erforderlich, der gesondert betätigt werden musste. Im vorliegenden Falle wird dies dadurch erreicht, dass das zweite Handstück durch eine kurze Schlauchbewegung zum Einlaufen aktiviert wird, bevor über die Verzögerungsschaltung der zugehörige Antrieb eingeschaltet wird, und dass dann der Stellmotor stillgesetzt wird, was durch Anhalten des Handstückes mit Versorgungsschlauch erzielt wird.

**Patentansprüche**

1. Steuereinrichtung für ein zahnärztliches Gerät, welches wenigstens ein Handinstrument (1, 2) mit einer Versorgungsleitung (4) enthält, die aus einem Gehäuse (5) heraus aus einer Ausgangsstellung in mehrere Betriebsstellungen bringbar, mittels einer Halte- und Rückholvorrichtung (8) in diesen Stellungen feststellbar und wieder in die Ausgangsstellung rückstellbar ist und welches Schaltmittel für elektrisch betätigbare Stell- oder Antriebsglieder (35, 23, 12) enthält, mit denen bestimmte Gerätefunktionen, beispielsweise das Rückführen der Versorgungsleitung (4), Vorbereiten und Ein- und Ausschalten von Antrieben und Medienflüssen, angesteuert oder direkt geschaltet werden können, wobei die Steuersignale zur Ansteuerung der Stellglieder (12, 23, 35) durch unmittelbar benachbart der Versorgungsleitung (4) angeordnete Befehlsmelder (26, 30, 31) erhalten werden, die zumindest dann, wenn die Versorgungsleitung (4) aus der Ausgangsstellung gebracht und in diese wieder zurückgeführt ist, ansprechen und Steuersignale an eine elektronische Steuerschaltung (36 bis 41; 44; 45; 48 bis 63) zur Ansteuerung der Stellglieder (12, 23, 35) geben, dadurch gekennzeichnet, dass zur Ansteuerung der Stellglieder (12, 23, 35) Befehlsmelder (24, 26, 30, 31) vorhanden sind, welche ihre Steuersignale aus dem Weg der der Versorgungsleitung (4) in Leitungsrichtung aufgezwungenen Bewegung und/oder aus Kräften quer zum Leitungsverlauf ableiten.

2. Steuereinrichtung nach Anspruch 1, dadurch gekennzeichnet, dass ein erster Befehlsmelder (30) vorhanden ist, der die Weglänge der der Versorgungsleitung (4) beim Aus- und Einziehen der Leitung aus dem bzw. in das Gerätegehäuse (6, 7) aufgezwungenen Bewegung erfasst und ein zweiter Befehlsmelder (31) vorhanden ist, der die Bewegungsrichtung der Versorgungsleitung (4) erfasst.

3. Steuereinrichtung nach Anspruch 2, dadurch gekennzeichnet, dass der erste Befehlsmelder (30) mit einem Zählglied (53) einer Logikschaltung (44, 45, 48 bis 61) gekuppelt ist, welches eine bestimmte Länge der auszuziehenden Versorgungsleitung (4) und damit deren Ausziehposition erfasst, und dass dem Zählglied (53) ein D-Flip-Flop (54) vorgeschaltet ist, welches nach Erreichen des festgelegten Zählerstandes ein Steuersignal setzt, mit dem ein Schaltelemente für Medien und Energie enthaltender Versorgungsbaustein (12) für das Handinstrument (1, 2) vorbereitend eingeschaltet wird.

4. Steuereinrichtung nach Anspruch 3, dadurch gekennzeichnet, dass durch ein vom ersten Befehlsmelder (30) angesteuertes elektronisches Verriegelungsglied (45) eine Verriegelung eines Schaltkontaktes (21) eines Schalters (18) für einen Antriebsmotor (35) des Handinstruments (2) während des Ausziehens der Versorgungsleitung (4) aus dem Gehäuse (6, 7) gegeben ist, dagegen bei Bewegungsstillstand der Versorgungsleitung (4) die Verriegelung aufgehoben und durch eine Verknüpfung des D-Flip-Flop (54) mit dem Versorgungsbaustein (12) und der Steuerleitung des Schalters (18) der Versorgungsbaustein (12) und bei Betätigung des Schalters (18) auch der Antriebsmotor (35) eingeschaltet werden.

5. Steuereinrichtung nach Anspruch 4, dadurch gekennzeichnet, dass die Logikschaltung (44, 45, 48 bis 61) ein weiteres Verriegelungsglied (61) enthält, welches den Stellmotor (23) einer die Versorgungsleitung (4) in ihre Ausgangsstellung zurückholenden Rückholvorrichtung (8) verriegelt, wenn der Schaltkontakt (21) während des Ausziehvorganges der Versorgungsleitung (4) geschlossen wird.

6. Steuereinrichtung nach Anspruch 2, dadurch gekennzeichnet, dass dem zweiten Befehlsmelder (31) ein D-Flip-Flop (51) vorgeschaltet ist, welches mit dem D-Flip-Flop (54) des ersten Befehlsmelders (30) gekuppelt ist, und dass beide D-Flip-Flops (51, 54) über eine UND/ODER-Verknüpfung (55, 58, 59) mit einer Anpassschaltung (interface 60), welche den Antriebsmotor (35) einschaltet, verbunden sind.

7. Steuereinrichtung nach Anspruch 6, dadurch gekennzeichnet, dass beiden Befehlsmeldern (30, 31) jeweils ein Schmitt-Trigger-Gatter (44, 48) vorgeschaltet ist.

8. Steuereinrichtung nach einem der Ansprüche 1 bis 7, dadurch gekennzeichnet, dass als Befehlsmelder elektronische Befehlsmelder, vorzugsweise optoelektronische Lichtschranken (42, 43; 46, 47) vorgesehen sind.

9. Steuereinrichtung nach Anspruch 8, dadurch gekennzeichnet, dass dem ersten Befehlsmelder (30) eine den Impulsabstand der Lichtschranke (42, 43) überbrückende nachtriggerbare monostabile Kippstufe (45) vorgeschaltet ist.

10. Steuereinrichtung nach Anspruch 1, dadurch gekennzeichnet, dass ein Kraftaufnehmer (26) vorhanden ist, der die bei Bewegung der Versorgungsleitung (4) quer zum Leitungsverlauf erzwungene Wellenbewegung entstehenden Kräfte aufnimmt und dessen abgegebene Impulse in der Steuerschaltung (36 bis 41; 44, 45; 48 bis 63) in elektrische Steuersignale zur Ansteuerung der Halte- und/oder Rückholvorrichtung (8) umgewandelt werden.

11. Steuereinrichtung nach Anspruch 10, dadurch gekennzeichnet, dass ein piezoelektrischer Kraftaufnehmer (28) vorgesehen ist, dessen Zug- oder Druckbelastungen in Form von Spannungsänderungen über einen Schmitt-Trigger (36) der Steuerschaltung (36 bis 41; 44, 45; 48 bis 63) zugeführt werden.

12. Steuereinrichtung nach Anspruch 11, dadurch gekennzeichnet, dass der Kraftaufnehmer (26) von zwei in einer Führungshülse (27) für die Versorgungsleitung (4) festen Gegenlagern (29) eingelegten Piezo-Plättchen (28) gebildet ist.

13. Steuereinrichtung nach Anspruch 12, dadurch gekennzeichnet, dass dem Kraftaufnehmer (26) eine nachtriggerbare Kippstufe (38) vorgeschaltet ist, die über eine Gatter-Logikschaltung mit den beiden Befehlsmeldern (30, 31) zur Erfassung der Bewegung und der Bewegungsrichtung der Versorgungsleitung (4) verknüpft ist, und dass das Zeitglied der Kippstufe (38) grösser gewählt ist als die Schaltzeit der beiden Befehlsmelder (30, 31).

14. Steuereinrichtung nach Anspruch 10, dadurch gekennzeichnet, dass ein induktiver Kraftaufnehmer in Form einer Tauchspule und eines in dieser geführten Magneten vorgesehen ist.

15. Steuereinrichtung nach Anspruch 14, dadurch gekennzeichnet, dass der Magnet mittels eines Druckgliedes federnd auf der Versorgungsleitung anliegt.

16. Steuereinrichtung nach Anspruch 10, dadurch gekennzeichnet, dass der Kraftaufnehmer (26) in einer zur Aufnahme und Halterung des an der Versorgungsleitung (4) angeschlossenen Handinstruments (1, 2) dienenden Ablagevorrichtung (3) baulich integriert ist.

**Claims**

1. A control device for a dental apparatus which contains at least one manual instrument (1, 2) with a supply line (4) which can be brought out of a housing (5) from a starting position into a plurality of operating positions, can be fixed in these positions by means of a hold-and-return device (8), and can be returned to the starting position, and which dental apparatus contains switching means for electrically operable adjusting or driving components (35, 23, 12) by means of which specific apparatus functions, for example the return of the supply line (4) or the preparation, switching on and switching off of drive components and media flows can be operated or directly switched, where the control signals which serve to operate the adjusting components (12, 23, 35) are obtained by means of command signalling devices (26, 30, 31) which are arranged directly adjacent to the supply line (4) and which respond and supply control signals to an electronic control circuit (36 to 41; 44; 45; 48 to 63) for the operation of the adjusting components (12, 23, 35) at least when the supply line (4) is brought out of the starting position and is returned to the starting position, characterised in that for the operation of the adjusting components (12, 23, 35) command signalling devices (24, 26, 30, 31) are provided which derive their control signals from the path of the movement to which the supply line (4) is compelled in the direction of the line and/or from forces transverse to the direction of the line.

2. A control device as claimed in Claim 1, characterised in that a first command signalling device (30) is provided which detects the path length of the movement to which the supply line (4) is compelled when the line is drawn out of or into the device housing (6, 7), as the case may be, and that a second command signalling device (31) is provided which detects the direction of movement of the supply line (4).

3. A control device as claimed in Claim 2, characterised in that the first command signalling device (30) is coupled to a counting member (53) of a logic circuit (44, 45, 48, 61) which detects a specific length of the supply line (4) to be drawn out, and thus the drawn-out position thereof, and that the counting member (53) is preceded by a D-type flip-flop (54) which sets a control signal on reaching the stipulated count by which a supply module (12) for the manual instrument (1, 2) is switched on into the ready state, which module contains switching elements for media and energy.

4. A control device as claimed in Claim 3, characterised in that an electronic locking member (45) driven by the first command signalling device (30) serves to lock a switching contact (21) of a switch (18) for a drive motor (35) of the manual instrument (2) while the supply line (4) is being drawn out of the housing (6, 7), whereas when the supply line (4) is stationary the lock is cancelled and by means of a logic-link of the D-type flip-flop (54) to the supply module (12) and the control line of the switch (18), the supply module (12) is switched on, and when the switch (18) is actuated the drive motor (35) is also switched on.

5. A control device as claimed in Claim 4, characterised in that the logic circuit (44, 45, 48 to 61) contains a further locking member (61) which locks the servomotor (23) of a return device (8) which returns the supply line (4) to its starting position when the switching contact (21) is closed during the drawing out of the supply line (4).

6. A control device as claimed in Claim 2, characterised in that the second command signalling device (31) is preceded by a D-type flip-flop (51) which is coupled to the D-type flip-flop (54) of the first command signalling device (30), and that both the D-type flip-flops (51, 54) are connected via an AND/OR logic-link (55, 58, 59) to a matching circuit (interface 60) which switches on the drive motor (35).

7. A control device as claimed in Claim 6, characterised in that both of the command signalling devices (30, 31) are each preceded by a Schmitt trigger stage (44, 48).

8. A control device as claimed in one of Claims 1 to 7, characterised in that the command signalling devices consist of electronic command signalling devices, preferably optoelectronic optical sensors (42, 43; 46, 47).

9. A control device as claimed in Claim 8, characterised in that the first command signalling device (30) is preceded by a retriggerable, monostable flip-flop (45) which bridges the pulse interval of the optical sensor (42, 43).

10. A control device as claimed in Claim 1, characterised in that a force transducer (26) is provided which absorbs the undulatory movement of occurring forces produced during the movement of the supply line (4) transverse to the direction of the line and whose emitted pulses are converted into electric control signals in the control circuit (36 to 41; 44, 45; 48 to 63) to drive the hold and/or return device (8).

11. A control device as claimed in Claim 10, characterised in that a piezoelectric force transducer (28) is provided whose traction or pressure loads are fed in the form of voltage changes to the control circuit (36 to 41; 44, 45; 48 to 63) via a Schmitt trigger (36).

12. A control device as claimed in Claim 11, characterised in that the force transducer (26) is formed by two piezo-plates (28) inserted in stationary abutments (29) in a guide sleeve (27) for the supply line (4).

13. A control device as claimed in Claim 12, characterised in that the force transducer (26) is preceded by a retriggerable flip-flop (38) which is logic-linked to the two command signalling devices (30, 31) for the detection of the movement and direction of movement of the supply line (4) via a gate logic circuit, and that the timer of the flip-flop (38) is set to a value greater than the switching time of the two command signalling devices (30, 31).

14. A control device as claimed in Claim 10, characterised in that an inductive force transducer is provided in the form of a plunger and a magnet arranged therein.

15. A control device as claimed in Claim 14, characterised in that the magnet contacts the supply line in spring-like fashion by means of a pressure component.

16. A control device as claimed in Claim 10, characterised in that the force transducer (26) is structurally integrated in a receiver (3) which serves to accommodate and support the manual instrument (1, 2) connected to the supply line (4).

## Revendications

1. Dispositif de commande pour un appareil dentaire, qui contient au moins un instrument à main, (1, 2) comportant une conduite d'alimentation (4) qui peut être ressortie d'un boîtier (5) depuis une position de départ dans plusieurs positions de service, peut être bloquée dans ces positions à l'aide d'un dispositif de rappel et de maintien (8) et être ramené à nouveau dans la position de départ et qui contient des moyens de commutation pour des organes de réglage ou d'entraînement (35, 23, 12) pouvant être actionnés électriquement et à l'aide desquels des fonctions déterminées de l'appareil, par exemple le retrait de la conduite d'alimentation (4), la préparation et le débranchement d'organes d'entraînement et de flux d'agents d'alimentation peuvent être commandés ou branchés directement, les signaux de commande servant à réaliser la commande des organes de réglage (12, 23, 35) étant obtenus au moyen de transmetteurs d'ordres (26, 30, 31) disposés au voisinage direct de la conduite d'alimentation (4) et qui, au moins lorsque la conduite d'alimentation (4) est ressortie de sa position de départ et est ramenée dans cette position, répondent et délivrent des signaux de commande à un circuit électronique de commande (36 à 41; 44; 45; 48 à 63) servant à commander les organes de réglage (12, 23, 35), caractérisé par le fait que pour la commande des organes de réglage (12, 23, 35) il est prévu des transmetteurs d'ordres, (24, 26, 30, 31) qui tirent leurs signaux de commande à partir du déplacement imposé à la conduite d'alimentation (4) suivant la direction de cette conduite et/ou à partir de forces exercées transversalement par rapport au cheminement de cette conduite.

2. Dispositif de commande suivant la revendication 1, caractérisé par le fait qu'il existe un premier transmetteur d'ordres (30) qui détecte la longueur du déplacement imposé à la conduite d'alimentation (4) lors de l'extraction de cette conduite hors du boîtier (6, 7) de l'appareil, ou lors de son introduction dans ce boîtier, et un second transmetteur d'ordre (31) qui détecte la direction de déplacement de la conduite d'alimentation (4).

3. Dispositif de commande suivant la revendication 2, caractérisé par le fait que le premier transmetteur d'ordres (30) est accouplé à un organe de comptage (53) d'un circuit logique (44, 45, 48, 61), qui détecte une longueur déterminée de la conduite d'alimentation (4) devant être ressortie et par conséquent la position dans laquelle cette conduite est ressortie, et qu'en amont de l'organe de comptage (53) se trouve branché un circuit à bascule bistable de type (D) (54) qui, une fois qu'un état de comptage déterminé est atteint, règle un signal de commande à l'aide duquel un module d'alimentation (12) contenant des organes de commutation pour les fluides et l'énergie, pour la pièce à main (1, 2) est branché de façon préliminaire.

4. Dispositif de commande suivant la revendication 3, caractérisé par le fait qu'un verrouillage d'un contact de commutation (21) d'un commutateur (18) pour un moteur d'entraînement (35) de la pièce à main (2) est déclenché, pendant l'extraction de la conduite d'alimentation (4) hors du boîtier (6, 7), par un circuit électronique de verrouillage (45) commandé par un premier transmetteur d'ordres (30), alors que, lorsque la conduite d'alimentation (4) n'est pas déplacée, le verrouillage est supprimé et que grâce à une combinaison logique du circuit à bascule bistable de type D (54) avec le module d'alimentation (12) avec le conducteur de commande du commutateur (18), le module d'alimentation (12) et, dans le cas de l'actionnement du commutateur (18), également le moteur d'entraînement (35) sont branchés.

5. Dispositif de commande suivant la revendication 4, caractérisé par le fait que le circuit logique (44, 45, 48 à 61) contient un autre circuit de verrouillage (61) qui verrouille le servomoteur (23) d'un dispositif de rappel (8) rappelant la conduite d'alimentation (4) dans sa position de départ, lorsque le contact de commutation (21) est fermé pendant le processus d'extraction de la conduite d'alimentation (4).

6. Dispositif de commande suivant la revendication 2, caractérisé par le fait qu'en amont du second transmetteur d'ordres (31) est branchée une bascule bistable de type D (51) qui est accouplée à la bascule bistable de type D (54) du premier transmetteur d'ordres (30), et que les deux bascules bistables de type D (51, 54) sont reliées par l'intermédiaire d'un ensemble combiné ET/OU (55, 58, 59) à un circuit d'adaptation (interface 60) qui branche le moteur d'entraînement (35).

7. Dispositif de commande suivant la revendication 6, caractérisé par le fait qu'une porte formant bascule de Schmitt (44, 48) est branchée en amont de chacun des deux transmetteurs d'ordres (30, 31).

8. Dispositif de commande suivant l'une des revendications 1 à 7, caractérisé par le fait qu'il est prévu, comme transmetteurs d'ordres, des transmetteurs électroniques d'ordres, de préférence des relais optoélectroniques (42, 43; 46, 47)).

9. Dispositif de commande suivant la revendication 8, caractérisé par le fait qu'en amont du premier transmetteur d'ordres (30) se trouve branché un étage à bascule monostable (45) pouvant être déclenché ultérieurement et dont la commande comble l'intervalle entre les impulsions du relais photoélectrique (42, 43).

10. Dispositif de commande suivant la revendication 1, caractérisé par le fait qu'il est prévu un détecteur de forces (26) qui encaisse les forces appliquées lors du déplacement de la conduite d'alimentation (4) transversalement par rapport au déplacement sinueux imposé à la conduite et que les impulsions délivrées par ce détecteur sont converties, dans le circuit de commande (36 à 41; 44, 45; 48 à 63), en des signaux électriques de commande servant à commander le dispositif de maintien et/ou de rappel (8).

11. Dispositif de commande suivant la revendication 10, caractérisé par le fait qu'il est prévu un détecteur piézoélectrique de forces (28) dont les contraintes en traction ou en compression sont envoyées sous la forme de variations de tension, par l'intermédiaire d'un déclencheur de Schmitt (36), au circuit de commande (36 à 41; 44, 45; 48 à 63).

12. Dispositif de commande selon la revendication 11, caractérisé par le fait que le détecteur (26) est formé par deux plaquettes piézoélectriques (28) insérées entre un manchon (27) de guidage de la conduite d'alimentation (4) et des butées fixes (29).

13. Dispositif de commande suivant la revendication 7, caractérisé par le fait qu'en amont du détecteur de forces (26) se trouve branché un étage à bascule (38) pouvant être déclenché ultérieurement et qui est combiné, par l'intermédiaire d'un circuit à portes logiques, aux deux transmetteurs d'ordres (30, 31) de manière à détecter le déplacement et le sens de déplacement de la conduite d'alimentation (4), et que la durée de commutation de l'étage à bascule (38) est choisie supérieure à la durée de commutation des deux transmetteurs d'ordres (30, 31).

14. Dispositif de commande suivant la revendication 10, caractérisé par le fait qu'il est prévu un transducteur inductif de forces réalisé sous la forme d'une bobine à succion et d'un aimant guidé par cette bobine.

15. Dispositif de commande suivant la revendication 14, caractérisé par le fait que l'aimant est appliqué élastiquement sur la conduite d'alimentation, au moyen d'un organe de compression.

16. Dispositif de commande suivant la revendication 10, caractérisé par le fait que le détecteur de forces (26) est intégré, du point de vue construction, dans un dispositif de soutien (3) servant à recevoir et à maintenir la pièce à main (1, 2) raccordée à la conduite d'alimentation (4).

FIG 1

FIG 2

FIG 3

0 038 452